## Europäisches Patentamt

## European Patent Office

## Office européen des brevets

(19)

(11) Veröffentlichungsnummer: **0 120 467**
**B1**

(12) **EUROPÄISCHE PATENTSCHRIFT**

(45) Veröffentlichungstag der Patentschrift:
**16.08.89**

(21) Anmeldenummer: **84103149.5**

(22) Anmeldetag: **22.03.84**

(51) Int. Cl.⁴: **G 11 B 23/02**

(54) **Bandspule für Magnetbänder.**

(30) Priorität: **29.03.83 DE 8309239 U**

(43) Veröffentlichungstag der Anmeldung:
**03.10.84 Patentblatt 84/40**

(45) Bekanntmachung des Hinweises auf die Patenterteilung:
**16.08.89 Patentblatt 89/33**

(73) Patentinhaber: **BASF Aktiengesellschaft,
Carl-Bosch-Strasse 38, D-6700 Ludwigshafen (DE)**

(72) Erfinder: **Schmidts, Kurt, Kornstrasse 10, D-7640 Kehl (DE)**
Erfinder: **Feyh, Hans-Otto, Tulpenweg 8, D-7607 Neuried (DE)**
Erfinder: **Mania, Max Joachim, Fliederweg 6, D-7601 Willstaett (DE)**

(84) Benannte Vertragsstaaten:
**AT BE CH DE FR GB IT LI NL SE**

(56) Entgegenhaltungen:
**FR-A- 2 325 991
GB-A- 1 598 832
GB-A- 2 020 629
US-A- 3 229 928
US-A- 3 346 211
US-A- 3 410 500**

## Beschreibung

Die Erfindung betrifft eine Bandspule, für Magnetbänder, bestehend erstens aus einem kreisringförmigen Wickelkern mit einer Öffnung für die Kernaufnahme eines Bandlaufwerks und mit einer Wickelfläche für das Band und zweitens aus zwei mit dem Wickelkern verbundenen kreisringförmigen Flanschen.

Mit der US-A-3 410 500 ist eine Bandspule dieser Art bekannt, bei der ein flanschloser Nabenteil in der Nähe des Umfanges angeordnete Befestigungsöffnungen aufweist und der erste Flansch von einer Seite durch diese Befestigungsöffnungen hindurchreichend mittels des zweiten Flansches durch Verkeilen befestigt wird, so daß Flansche und Wickelkern über mechanische Befestigungsmittel verbunden sind und eine Einheit bilden. Zusätzlich sind jedoch hintereinandergreifende Ringwandungen, die beim ersten Flansch der Wickelfläche gegenüberliegen, über Kleboder Bindemittel miteinander verbunden.

Eine Verformung der Wickelfläche zieht bei dieser Spulenkonstruktion zwangsläufig eine Verformung der Ringwandungen der Flansche und dieser selbst nach sich, so daß die Spule völlig unbrauchbar wird.

Es ist auch mit der DE-A-2 639 321 eine Bandspule bekannt, deren Flansche mit dem Kern durch eine Vielzahl ringförmiger Verschweißungen verbunden sind. Die Ringwandung mit der Wickelfläche wird dabei durch die Außenwand des Kerns gebildet, wodurch der Gefahr einer Verformung der Flansche selbst begegnet werden soll. Dabei ist jedoch nachteilig, daß die Materialien von Flanschen und Kern aufeinander abgestimmt sein müssen, um miteinander verschweißbar zu sein; die Auswahl ist dadurch sehr beschränkt. Durch die umlaufenden Verschweißungen bei verschiedenen Durchmessern werden bei negativen Durchmesseränderungen auftretende Kräfte auf die Schweißstellen und die Planflächen der Flansche übertragen, wodurch Risse in den Schweißzonen und tellerförmige Verformungen der Flansche auftreten. Außerdem wird der bekannte Wickelkern durch der Wickelfläche gegenüberliegende Aussparungen geschwächt und über dazwischen liegende Rippen wird unter entsprechendem Lagendruck der Wickelkern in eine Vieleckform gepreßt, wodurch er unbrauchbar wird.

Es ist ferner aus der DE-A-3 139 698 eine Bandspule bekannt, bei der ebenfalls die Flansche mit dem Wickelkern an 72 Punkten verschweißt sind, 48 Punkte liegen am Umfang des Mittelteils der Nabe und 24 Punkte sind nahe der Wickelfläche vorgesehen. Außer den zum vorgenannten Stand der Technik genannten Nachteilen ergibt sich noch der gemeinsame Nachteil, daß der axiale Rundlauf bei beiden dreiteilig miteinander verschweißten Spulen nicht oder nur sehr aufwendig erreichbar ist, da durch die Anordnung der Schweißnähte oder -punkte der räumliche Abstand zwischen Wickelfläche und Flanschen bestimmt wird.

In der GB-A-2 029 629 ist eine Bandspule für Magnetbänder beschrieben, deren Flansche durch Öffnungen im Wickelkern hindurch unlösbar miteinander verbunden sind. Außerdem ist jedoch über Schweiß- oder Klebstellen der Außenring des Wickelkerns, der die Wickelfläche bildet, direkt befestigt, so daß – trotz eines umlaufenden Spalts, der radial hinter dem Außenring angeordnet ist – die Gefahr der Flanschverformung, im Falle, daß hohe Radialdruckkräfte auftreten, besteht, und so Bandlagen auf die Wickelfläche wirkende Beschädigungen kaum vermeidbar sind.

Mit der US-A-3 410 500 ist ebenfalls eine Bandspule für Magnetbänder beschrieben, deren Flansche durch Öffnungen im Wickelkern hindurch über Steckverbindungen in Form von Zapfen und Hülsen unlösbar miteinander verbunden sind. Miteinander verschweißte Ringansätze an den Flanschen bilden die Wickelfläche zur Aufnahme der Radialdruckkräfte des Bandes. Zum Zentrum der Bandspule hin hinter der Wickelfläche ist der Wickelkern angeordnet und der Außenring desselben steht, um eine Relativbewegung zwischen Wickelkern und Flanschen zu vermeiden, entweder über ein Füllmaterial indirekt in Kontakt mit der Innenfläche der Ringansätze der Flansche oder ist über ein geeignetes Klebemittel direkt der Innenfläche der Ringansätze der Flansche befestigt.

In beiden vorgenannten Ausbildungen rufen die Radialdruckkräfte direkte Verformungen der Flansche und damit Bandbeschädigungen hervor und außerdem werden Verformungen der Wickelfläche auch noch auf den Wickelkern übertragen.

Der Erfindung liegt somit die Aufgabe zugrunde letztgenannte Probleme zu lösen. Die Lösung dieser Aufgabe geht aus Anspruch 1 hervor.

Die Bandspule nach der Erfindung besitzt eine sehr grosse Formstabilität, und das Wickelgut, meist auf der Basis thermoplastischer Kunststoffmaterialien, wird zuverlässig auf- und abwickelbar und lagerbar, wodurch Prägungen, Säbelförmigkeit und Randwelligkeit weitgehend vermieden werden. Vorteilhaft wird die Auswahlmöglichkeit an Kunststoffmaterialien für Flansche und Wickelkern bedeutend größer, daher können zweckmäßig hochfeste Werkstoffe wie z.B. glasfaserverstärkte Kunststoffe oder Leichtmetalle für den Wickelkern benutzt werden, unabhängig davon, aus welchem thermoplastischen Kunststoff die Flansche bestehen.

In zweckmäßiger Weiterbildung der Spule ist zwischen dem Wickelkern und der Flanscheinheit mindestens ein im wesentlichen umlaufender Spalt vorsehbar zur Aufnahme von durch auf die Wickelfläche wirkende Radialdruckkräfte hervorgerufenen Verformungen. Dadurch können durch radiale Druckkräfte auf die Wickelfläche ausgeübte Verformungen (negative Durchmesseränderungen) toleriert werden, die bei entsprechender Dimensionierung des oder der Spalte, sich nicht als Formänderungen der Flansche auswirken können.

In weiterer zweckmäßiger Ausbildung kann die unlösbare Verbindung der Flansche mehrere, insbesondere 12 bis 16 Zapfen-Loch-Verbindungselemente umfassen, die vorzugsweise durch Verschweißen unlösbar verbindbar sind.

Eine vorzugsweise praktische Ausführung der Spule besteht darin, daß die Löcher in Hülsen ausgebildet sind und diese innen mit wenigstens zwei, insbesondere vier, radial angeordneten Schweißrippen ausgebildet sind. Damit wird es herstellungsmäßig günstig, über axiales Zusammenschweißen der Zapfen und Hülsen das Zusammenpressen der Flansche bis direkt an die Auflageflächen des Wickelkerns zu bewerkstelligen.

Zur Herstellung der Schweißstellen ist es praktisch vorteilhaft, wenn außen an den Hülsen Ausbuchtungen, insbesondere radial zu jeder Hülse, ausgebildet sind.

Eine vorteilhafte Konstruktion der Spule wird auch darin gesehen, daß der Wickelkern im Querschnitt eine I-Form besitzt, wobei der Mittelteil der I-Form räumlich eine umlaufende horizontal liegende Stützwand ist, die mit dem Dachteil der I-Form, der Wickelfläche gegenüber, verbunden ist. Auf diese Weise wird einer Deformierung der Wickelfläche weitgehend dadurch entgegengewirkt, daß die radial innenliegenden Teile des Wickelkernkörpers zur Stützfunktion gegen den Wickeldruck herangezogen werden.

Eine weitere zweckmäßige Ausbildung der Spule liegt auch noch darin, daß die radial unterhalb der Wickelfläche liegenden Teile des Wickelkerns und der Flansche im Querschnitt gemeinsam eine Kastenform bilden.

Einzelheiten der Bandspule sind den nachfolgenden, in der Zeichnung dargestellten Ausführungsbeispielen entnehmbar.

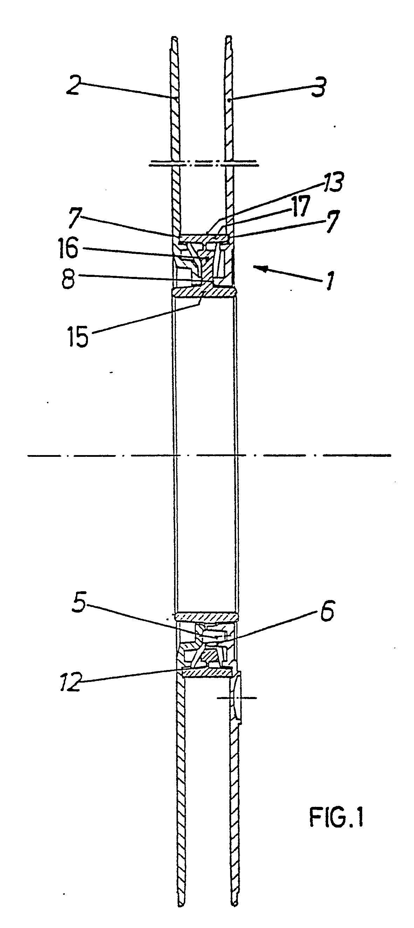

Figur 1 zeigt einen Diagonalschnitt durch die Spule,

Figur 2 zeigt den zusammenhängenden Mittelbereich von Wickelkern und Flanschen in größerem Maßstab,

Figur 3 zeigt eine Einzelheit A gemäß der Schnittlinie A'–A' in Figur 2.

Ein kreisringförmiger Wickelkern 1 ist aus hochfestem Werkstoff, z.B. glasfaserverstärktem ABS oder anderem geeignetem glasfaserverstärktem Kunststoff oder aus Metall oder einer Metallegierung hergestellt. Der Wickelkern 1 besitzt den engschraffierten I-förmigen Querschnitt. Der Mittelteil 15 der I-Form besteht aus einem am Innenring 15 des Kerns 1 befestigten Hauptteil 16 von größerer Dicke, der am Außenring 17 über eine dünnere Stützwand 12 befestigt ist. Im Hauptteil 16 sind kreisförmige Durchbrüche 4 für die Befestigung der Flansche vorgesehen. Die Außenwand des Außenrings 17 bildet die Wickelfläche 13 für das aufzuwickelnde Band, insbesondere Magnetband. Der Außenring 17 ist gegenüber dem Innenring 15 und dem Hauptteil 16 über diametral angeordnete Rippen 18 in ausreichender Zahl abgestützt.

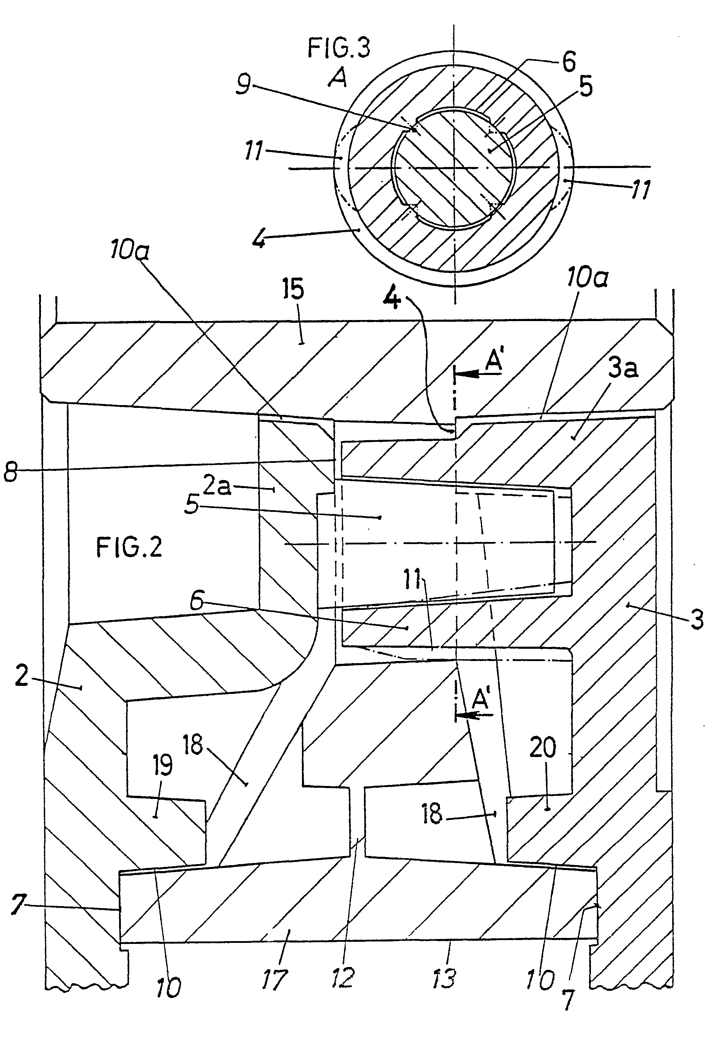

Am Wickelkern 1 sind ein oder zwei Flansche 2 und 3 aus geeignetem thermoplastischem Material, z.B. aus Polystyrol oder ähnlichem Kunststoffmaterial, hergestellt. Wie insbesondere aus Figur 2 ersichtlich ist, sind die Flansche 2 und 3 verschieden aber zusammenfügbar ausgebildet. Dabei weist Flansch 2 im Querschnitt eine axiale Abkröpfung 2a und einen daran ausgebildeten Zapfen 5 auf. Der andere Flansch 3 besitzt an der entsprechenden Stelle eine bei Herstellung angeformte passende Hülse 6, an deren Innenwandung wenigstens zwei, insbesondere vier Schweißrippen 9 (Figur 3) vorgesehen sind, die sich radial, aber auch axial an der Wand erstrecken können. Außen an den Hülsen 6 können Ausbuchtungen 11, die insbesondere radial angeordnet sind, ausgebildet sein. Diese Ausbuchtungen 11 sind so angeordnet und dimensioniert, daß die kreisförmigen Durchbrüche 4 im Wickelkern 1 die Ausbuchtungen 11 spielfrei im Paßsitz aufnehmen können. In Figur 3 sind Zapfen 5, Hülse 6, Schweißrippen 9, Ausbuchtungen 11 in ihrer Anordnung zum Kreisdruchbruch 4 im Kern dargestellt. Es sind mehrere, vorteilhaft 12 bis 16, Zapfen-Hülsen-Verbindungen und eine entsprechende Anzahl von Kreisdurchbrüchen 4 vorgesehen, um eine genügende zentralsymmetrische Verbindung zwischen den Flanschen 2 und 3, die besonders vorteilhaft direkt miteinander durch Schweißen, insbesondere mittels Ultraschall, zu einer unlösbaren Einheit verbunden werden. Natürlich ist eine Klebung und evtl. eine unlösbare Schnapp- oder Rastverbindung statt Schweißen oder zusätzlich zum Schweißen einsetzbar. Die Form der Zapfen 5 und Hülsen 6 ist nur durch das Herstellverfahren beschränkt. Theoretisch sind eine Vielzahl von Ineinanderpassenden Formpaaren denkbar. Die Anzahl der verwendeten Zapfen-Hülsen-Paare richtet sich nach deren Einzelmaßen und nach der zulässigen Zahl der Durchbrüche 4 im Kern 1.

Zwischen Flanscheinheit und Kern 1 sollen ausdrücklich keine Schweiß- oder Klebverbindungen vorgesehen sein. Beliebige andersartige kraftschlüssige mechanische Verbindungen, die theoretisch lösbar sind, wie Steck-, Spann- oder Klemmverbindungen, sind für die Verbindung zwischen Flanscheinheit und Kern erfindungsgemäß vorgesehen. Wenn die Flansche 2 und 3 bis zu den Auflageflächen 7 und 8 am Kern 1, genauer an die Stirnflächen 7 des Außenrings 17 und die Ringfläche 8 am Hauptteil 16, zusammengepreßt werden, werden zwar definierte Auflageflächen zum Kern 1 erhalten, letzterer wird jedoch nur eingeklemmt oder eingesteckt oder eingespannt und nicht extra an einem oder beiden der Flansche 2 und 3 befestigt. Die Verbindung zwischen Kern und Flanscheinheit soll also ausschließlich über Reib-, Klemm- oder Spannkräfte bewerkstelligt werden, deren Größe gerade so eingestellt werden muß, daß eine relative Drehung zwischen Kern und Flanschen ausgeschlossen ist. Der Kern soll sich also bei allen auftretenden Drehmomenten nicht relativ zur Flanscheinheit drehen können.

Die Flansche 2 und 3 sind aus geeignetem thermoplastischem Kunststoff in geeigneten Herstellverfahren herstellbar, vorzugsweise im Spritzguß. Selbstverständlich sind die Flansche auch aus Metall oder Leichtmetall oder aus deren Legierungen geeignet herstellbar. Ebenfalls sind Kunststoff-Flansche mit Metall- oder Leichtmetalleinlagen denkbar.

Die Verbindung der Flansche 2 und 3 an den Zapfen 5 und Hülsen 6 ist vorteilhaft über geeignete Schweißverfahren, bei Kunststoffmaterial zweckmäßig über Ultraschallschweißung praktisch herstellbar. Bei Metallmaterial kann auch Elektro- oder Autogenschweißen oder Laser-Schweißen benutzt werden.

Die Stützwand 12 ist vorgesehen, um die radial auf die Wickelfläche 13 wirkenden, durch Bandzug hervorgerufenen Lagerdruckkräfte des aufgewickelten Bandmaterials besser aufgenommen werden. Eine Deformierung der Wickelfläche 13 wird so weitgehend vermieden und dadurch wird der übrige Wickelkern-Körper mit in die Stützfunktion einbezogen. Damit diese radialen Lagerdruckkräfte auch bei einer eventuellen negativen Durchmesseränderung an der Wickelfläche 13 keinen direkten Einfluß auf die Flansche 2 oder 3 ausüben und diese verformen können, ist direkt hinter dem Außenring 17 und den axialen Flanschfortsätzen 19 und 20 ein Spalt 10 vorgesehen. Ebenso kann zweckmäßig zwischen dem Innenring 15 und den Flanschteilen 2a und 3a ein Spalt 10a. Die Spalte 10 und 10a sind im wesentlichen umlaufend ausgebildet und dienen zur Aufnahme eventueller radialer Verformungen. Es ist daher möglich Füllmaterial in diesen Spalten 10 und 10a vorzusehen.

Die Spalte 10 und 10a sollten eine geeignete Breite abhängig von den jeweils verwendeten Materialien aufweisen. Ein vorteilhafter Bereich von etwa 0,05 bis 0,1 mm hat sich für eine Computerbandspule mit im Bereich von ca. 12 bis 27 cm Durchmesser ergeben, wenn der Kern aus ABS-Kunststoff mit Glasfasereinlage und die Flansche aus Polystyrol bestehen. Falls der oder die Spalte, wie oben erwähnt, mit Material gefüllt werden, sollte die Spaltbreite entsprechend größer gewählt werden, damit in jedem Fall ein Luftspalt zur Verformungswegaufnahme zur Verfügung steht.

Von der Herstellungstechnik, z.B. Spritzguß, lassen sich die Bezugs- oder Auflageflächen 7 und 8, sowie die an den Spalten 10 und 10a einander gegenüberliegenden Flächen mit ausreichender Genauigkeit herstellen, so daß nach Verschweißen der Flansche 2 und 3 ohne jegliche zusätzliche Verbindungsmittel zum Kern 1 eine zuverlässige, maßhaltige Fertigung der Spulen ermöglicht wird. Infolge der Konstruktion der Mittelteile der Flansche 2 und 3 und des Kerns 1 lassen sich die Lagerdruckkräfte optimal verteilen und aufnehmen.

## Patentansprüche

1. Bandspule für Magnetbänder, bestehend aus einem Wickelkern (1) und zwei kreisringförmigen Flanschen (2, 3), wobei nur die Flansche mittels Steck- und/oder Klemm- und/oder Spannverbindungen (Steckverbindung 11, 4) direkt miteinander verbunden sind und der Wickelkern (1) zwischen den direkt miteinander verbundenen Flanschen (2, 3) über Reib- bzw. Klemm- bzw. Spannkräfte von solcher Größe gehalten wird, daß bei allen auftretenden Drehmomenten eine relative Drehung zwischen den direkt miteinander verbundenen Flanschen (2, 3) und dem Wickelkern (1) ausgeschlossen ist und wobei die Außenumfangsfläche des Wickelkerns (1) die Wickelfläche (13) für das Band bildet und wenigstens ein im wesentlichen umlaufender Spalt (10, 10a) zwischen dem Wickelkern und den Flanschen (2, 3) vorgesehen ist zur Aufnahme von durch auf die Wickelfläche (13) wirkenden Radialdruckkräften.

2. Bandspule nach Anspruch 1, dadurch gekennzeichnet, daß ein erster umlaufender Spalt (10) zwischen dem die Wickelfläche (13) aufweisenden Außenring (17) des Wickelkerns (1) und den radial nächstliegenden Flanschteilen (19, 20) und ein zweiter umlaufender Spalt (10a) zwischen dem Innenring (15) des Wickelkerns (1) und den radial nächstliegenden Flanschteilen (2a, 3a) vorgesehen sind.

3. Bandspule nach Anspruch 2, dadurch gekennzeichnet, daß für einen Wickelkern aus ABS-Kunststoff mit Glasfasereinlage und Flanschen aus Polystyol die Breite der umlaufenden Spalte (10, 10a) im Bereich von etwa 0,05 bis etwa 0,1 mm beträgt.

4. Bandspule nach einem der Ansprüche 1 bis 3, dadurch gekennzeichnet, daß der die Wickelfläche (13) aufweisende Außenring (17) des Wickelkerns (1) über eine relativ dünne, im wesentlichen senkrecht zur Wickelfläche (13) vorgesehene Stützwand (12) mit den anderen Wickelkernteilen (16, 15) verbunden ist, zur Aufnahme von Verformungskräften.

5. Spule nach Anspruch 1 bis 4, dadurch gekennzeichnet, daß die mechanische Verbindung der Flansche (2 und 3) mehrere, insbesondere 12 bis 16 Zapfen-Loch-Verbindungselemente umfaßt.

6. Spule nach Anspruch 5, dadurch gekennzeichnet, daß die Zapfen-Loch-Verbindungselemente mittels Schweißens, insbesondere Ultraschallschweißens, unlösbar verbunden sind.

7. Spule nach einem der Ansprüche 5 oder 6, dadurch gekennzeichnet, daß die Löcher in Hülsen (6) ausgebildet sind und diese innen mit wenigstens zwei, insbesondere vier radial angeordneten Schweißrippen (9) ausgebildet sind.

8. Spule nach Anspruch 7, dadurch gekennzeichnet, daß außen an den Hülsen (6) Ausbuchtungen (11), insbesondere radial zu jeder Hülse (6), ausgebildet sind.

9. Spule nach einem der Ansprüche 1 bis 8, dadurch gekennzeichnet, daß der Wickelkern im Querschnitt eine I-Form besitzt, wobei der Mittelteil der I-Form räumlich eine umlaufende horizontal liegende Stützwand (12) ist, die mit dem Dachteil der I-Form, der Wickelfläche (13) gegenüber, verbunden ist.

10. Spule nach einem der Ansprüche 1 bis 9, dadurch gekennzeichnet, daß die radial unterhalb der Wickelfläche (13) liegenden Teile des Wickelkerns (1) und der Flansche (2 und 3) im Querschnitt gemeinsam eine Kastenform bilden.

## Claims

1. A reel for magnetic tapes, consisting of a hub (1) and two circular flanges (2, 3), wherein only the flanges are connected directly to one another by means of plug and/or compression and/or clamp connections (plug connection 11, 4), and the hub (1) is held between the flanges (2, 3) directly connected to one another by means of frictional or compressive or tensional forces of a magnitude such that, at all torques which occur, rotation of the flanges (2, 3) directly connected to one another relative to the hub (1) is prevented, and wherein the outer circumferential surface of the hub (1) forms the winding surface (13) for the tape, and one or more essentially circumferential gaps (10, 10a) are provided between the hub and the flanges (2, 3) for absorbing radial compressive forces acting on the winding surface (13).

2. A reel as claimed in claim 1, wherein a first circumferential gap (10) is provided between the outer ring (17) of the hub (1), which outer ring possesses the winding surface (13), and the radially closest flange parts (19, 20), and a second circumferential gap (10a) is provided between the inner ring (15) of the hub (1) and the radially closest flange parts (2a, 3a).

3. A reel as claimed in claim 2, wherein, for a hub consisting of ABS plastic and having a glass fiber insert and flanges consisting of polystyrene, the width of the circumferential gaps (10, 10a) is from about 0.05 to about 0.1 mm.

4. A reel as claimed in any of claims 1 to 3, wherein, in order to absorb deformation forces, the outer ring (7) of the hub (1), which outer ring possesses the winding surface (13), is connected to the other hub parts (16, 15) by a relatively thin support wall (12) provided essentially at right angles to the winding surface (13).

5. A reel as claimed in any of claims 1 to 4, wherein the mechanical connection of the flanges (2 and 3) comprises a plurality, in particular from 12 to 16, peg-hole connecting elements.

6. A reel as claimed in claim 5, wherein the peg-hole connecting elements are nondetachably connected by means of welding, in particular ultrasonic welding.

7. A reel as claimed in claim 5 or 6, wherein the holes are in the form of sleeves (6) and the latter are provided on the inside with two or more, in particular four, radial welded ribs (9).

8. A reel as claimed in claim 7, wherein bulges (11) are formed on the outer surface of the sleeves (6), in particular radially with respect to each sleeve (6).

9. A reel as claimed in any of claims 1 to 8, wherein the hub has a I-shaped cross-section, the middle part of the I shape being spatially a circumferential horizontal support wall (12), which is connected to the roof part of the I shape, opposite the winding surface (13).

10. A reel as claimed in any of claims 1 to 9, wherein those parts of the hub (1) and of the flanges (2 and 3) which lie radially below the winding surface (13) together form a box shape in cross-section.

## Revendications

1. Bobine à ruban pour bandes magnétiques, constituée d'un noyau d'enroulement (1) et deux flasques en forme de couronne (2, 3), seuls les flasques étant reliés directement entre eux au moyen de liaison à enfichage et/ou serrage et/ou tension (liaison à serrage 11, 4) et le noyau d'enroulement (1) est maintenu entre les flasques (2, 3) liés directement entre eux, par des forces de frottement, de serrage, ou de tension, d'intensités telles que, pour tous les couples qui apparaissent, soit exclu tout mouvement de rotation relatif entre les flasques (2, 3), liés directement entre eux, et le noyau d'enroulement (1), et les surfaces périphériques externes du noyau d'enroulement (1) formant les surfaces d'enroulement de la bande, et au moins un interstice (10, 10a), faisant, sensiblement, tout le tour, étant prévu entre le noyau d'enroulement et les flasques (2, 3) pour absorber les forces de pression radiales agissant sur les surfaces d'enroulement (13).

2. Bobine à ruban selon la revendication 1, caractérisée par le fait que sont prévus un premier interstice faisant tout le tour (10) entre l'anneau externe (17) du noyau d'enroulement (1), présentant la surface d'enroulement (13), et les parties de flasques radialement adjacentes (19, 20) et un second interstice (10a) faisant tout le tour entre l'anneau d'enroulement (1) et les parties de flasques radialement adjacentes (2a, 3a).

3. Bobine à ruban selon la revendication 2, caractérisée par le fait que, pour un noyau d'enroulement en matière plastique ABS renforcée par des fibres de verre et des flasques en polystyrène, la largeur des interstices faisant tout le tour (10, 10a) est d'environ 0,005 à environ 0,1 mm.

4. Bobine à ruban, selon une des revendications 1 à 3, caractérisée par le fait que l'anneau externe (17) du noyau d'enroulement (1) présentant la surface d'enroulement (13) est relié aux autres parties du noyau d'enroulement (16, 15), pour encaisser des efforts de déformation, par une paroi d'appui (12) relativement mince, sensiblement perpendiculaire à la surface d'enroulement (13).

5. Bobine selon la revendication 1 à 4, caractérisée par le fait que la liaison mécanique des flasques (2 et 3) comprend plusieurs, en particulier 12 à 16, éléments de liaison à mortaise.

6. Bobine selon la revendication 5, caractérisée par le fait que les éléments de liaison à mortaise sont reliés de façon inséparable par soudure, notamment soudure à ultrasons.

7. Bobine selon l'une des revendications 5 ou 6, caractérisée par le fait que les trous de mortaise sont ménagés dans les manchons (6) et ceux-ci sont munis intérieurement d'au moins deux, en particulier quatre, nervures de soudage (9) disposées radialement.

8. Bobine selon la revendication 7, caractérisé par le fait qu'extérieurement sur les manchons (6), sont formés des renflements (11) en particulier radialement à chaque manchon (6).

9. Bobine selon l'une des revendications 1 à 8, caractérisée par le fait que le noyau d'enroulement possède, en coupe, une forme en I, la partie centrale de cette forme étant, spatialement, une paroi d'appui, faisant tout le tour horizontalement, qui est reliée, face à la surface d'enroulement (13), avec la partie de dessus de la forme en I.

10. Bobine selon une des revendications 1 à 9, caractérisée par le fait que les parties du noyau d'enroulement (1) et des flasques (2 à 3) situées radialement en-dessous de la surface d'enroulement (13), ont ensemble, en coupe, une forme de caisson.

FIG.1

FIG.3

FIG.2